# EUROPEAN PATENT APPLICATION

(11) **EP 4 848 343 A1**
(43) Date of publication of application: **02.12.2026**
(21) Application number: 25816169.4
(22) Date of filing: 10.04.2025
(51) Int. Cl.: H01M 4/04, B30B 3/04

(54) **APPARATUS FOR MANUFACTURING ELECTRODE**

(30) Priority: 31.05.2024 KR 20240071831
(71) Applicant: LG Energy Solution, Ltd., Seoul 07335 (KR)
(72) Inventor: KIM, Soon, Daejeon 34122 (KR); CHOI, Kyuhyun, Daejeon 34122 (KR); CHUNG, Changkwon, Daejeon 34122 (KR)
(74) Representative: Plasseraud IP
(86) International application number: PCT/KR2025/004865
(87) International publication number: WO 2025/249755

(57) **Abstract**

An electrode manufacturing apparatus according to one specific embodiment of the present disclosure comprises: a plurality of calendering rolls that are arranged at predetermined intervals so that an electrode sheet is rolled sequentially, and a plurality of housings that individually support respective rotating shafts of the plurality of calendering rolls, wherein an extension length of at least one housing among the plurality of housings in a travelling direction of the electrode sheet is different from an extension length of the remaining housings.

## Description

### [TECHNICAL FIELD]

### Cross-Reference to Related Application(s)

This application claims priority to and the benefit of Korean Patent Application no. KR10-2024-0071831, filed on May 31, 2024, with the Korean Intellectual Property Office, the disclosure of which is hereby incorporated by reference in its entirety

The present disclosure relates to an electrode manufacturing apparatus, and more particularly, to an electrode manufacturing apparatus which can improve deformation occurring in a housing for supporting respective calendering rolls.

### [BACKGROUND ART]

In modern society, as portable devices such as a mobile phone, a notebook computer, a camcorder and a digital camera, as well as energy storage systems (ESS), have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among batteries, the lithium secondary battery has come into the spotlight because it has advantages, for example, being freely charged and discharged, and having very low self-discharge rate and high energy density.

The manufacturing process of such a lithium secondary battery is largely divided into three processes: an electrode process, an assembly process, and a formation process. The electrode process is again divided into an active material mixing process, an electrode coating process, a drying process, a rolling process, a slitting process, a winding process, and the like. Among these processes, the electrode coating process is divided into a wet process of applying an active material slurry to an electrode current collector, and a dry process of applying the active material in a solid state to the current collector.

When the electrode is formed by the wet process, in the process in which the solvent is evaporated and removed, defects such as pinholes or cracks may be induced in the electrode active material layer. In addition, not only a considerable amount of energy is required to remove a large amount of solvent in the drying process, but also a large-sized and expensive drying device is required and thus, there is a drawback that the overall processability of the secondary battery is greatly deteriorated.

In order to solve the drawbacks of such wet process, recently, research on a method for manufacturing a dry electrode of a secondary battery through a dry process that does not use a solvent has been actively conducted.

The dry electrode process is a method in which an electrode active material, a binder, a conductive material and the like are mixed without a liquid medium such as a solvent or dispersion medium to prepare a powder mixture, and the powder mixture is prepared into a dry electrode sheet through a calendering process, and the prepared dry electrode sheet is laminated onto a current collector to manufacture the electrode.

Such a dry electrode process has the advantages that the binder distribution is uniform in the thickness direction of the electrode, which exhibits excellent electrode adhesion and life characteristics; the binder does not directly cover the surface of the active material, which reduces the interfacial reaction resistance on the surface of the active material and is advantageous for the movement of lithium ions within the electrode; and the flexibility of the electrode is very high due to the use of a fiberizable binder.

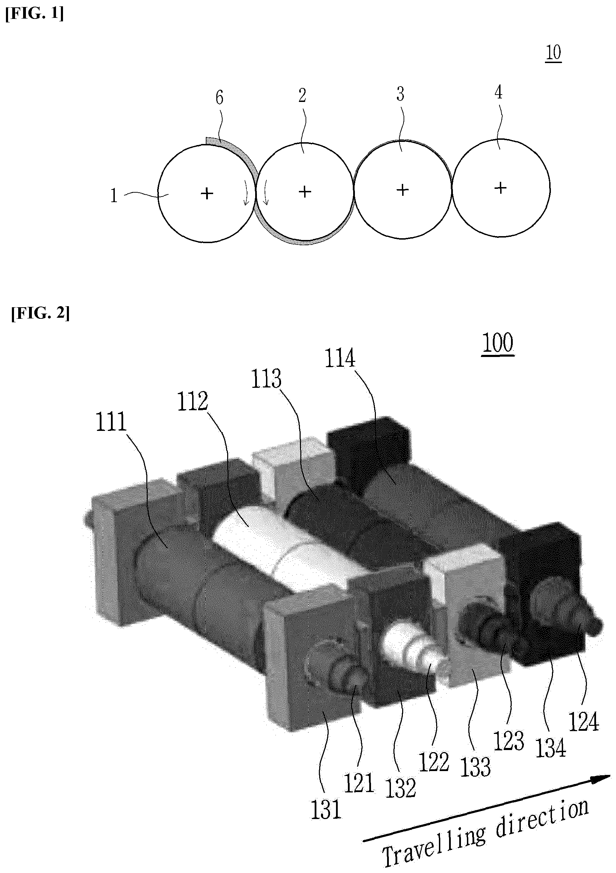

FIG. 1 is a schematic diagram of a conventional electrode manufacturing apparatus.

Referring to FIG. 1, a conventional electrode manufacturing apparatus 10 may include a plurality of calendering rolls 1, 2, 3, 4. The plurality of calendering rolls 1, 2, 3, 4 are arranged adjacently to each other in multiple stages, and a drawing process may be performed as the electrode sheet 6 travels between calendering rolls 1, 2, 3, 4 arranged in multiple stages.

That is, while the electrode sheet 6 passes between the plurality of calendering rolls 1, 2, 3, 4 provided in multiple stages, the thickness of the electrode sheet 6 may be sequentially reduced. Thereby, since the interval between the plurality of calendering rolls 1, 2, 3, 4 may be different depending on the thickness of the electrode sheet 6, the load applied to each of the plurality of calendering rolls 1, 2, 3, 4 may be different from each other. Generally, since the interval between the plurality of calendering rolls 1, 2, 3, 4 is very small as compared with the thickness of the electrode sheet 6 to be fed in, a considerable load may be applied to each component of the electrode manufacturing apparatus 10, and in a severe case, it may cause an apparatus failure or a decrease in the electrode quality. However, there was generally no adjustment for the design of respective components, particularly the housing, in accordance with the magnitude of the load applied to each of the plurality of calendering rolls 1, 2, 3, 4, which causes a problem that significant deformation occurs in the housing that supports the plurality of calendering rolls 1, 2, 3, 4.

### [DETAILED DESCRIPTION OF THE INVENTION]

### [Technical Problem]

It is a technical problem to be solved by the present disclosure to provide an apparatus for manufacturing an electrode which can improve deformation occurring in a housing for supporting respective calendering rolls.

However, the technical problems to be solved by embodiments of the present disclosure are not limited to the above-described problems, and can be variously expanded within the scope of the technical idea included in the present disclosure.

### [Technical Solution]

According to certain aspects of the present disclosure, there is provided an electrode manufacturing apparatus comprising: a plurality of calendering rolls that are arranged at predetermined intervals so that an electrode sheet is rolled sequentially; and a plurality of housings that individually support respective rotating shafts of the plurality of calendering rolls, wherein an extension length of at least one housing among the plurality of housings in a travelling direction of the electrode sheet may be different from an extension length of the remaining housings.

The extension length of at least one housing among the plurality of housings may be determined by a magnitude of a linear pressure by the calendering roll that is supported by the at least one housing.

The extension length of a first housing which is located at the uppermost end in the travelling direction of the electrode sheet among the plurality of housings may be determined regardless of the magnitude of the linear pressure.

The extension length of the first housing among the plurality of housings may be greater than the extension length of any one housing among the remaining housings.

Among the remaining housings excluding the first housing among the plurality of housings, if the magnitude of the linear pressure by a second calendering roll supported by any one second housing is larger than the magnitude of the linear pressure by a third calendering roll supported by the other third housing, the extension length of the second housing may be smaller than the extension length of the third housing.

The third housing may be located on more downstream side in the travelling direction than the second housing, and the magnitude of the linear pressure by the second calendering roll may be larger than the magnitude of the linear pressure by the third calendering roll.

The magnitude of the linear pressure by the plurality of calendering rolls may decrease toward the downstream of the travelling direction.

A tendency value of data on the respective extension lengths of the plurality of housings and the magnitude of the respective linear pressures by the plurality of calendering rolls may be determined, and based on the tendency value, the respective extension lengths of the plurality of housings may be determined so that the respective extension lengths of the plurality of housings is within a predetermined range.

The respective extension lengths of the plurality of housings may be determined such that the sum of the respective extension lengths of the plurality of housings is within a predetermined range.

If at least one of the extension lengths of the plurality of housings falls outside the predetermined range based on the tendency value, the respective extension lengths of the plurality of housings may be determined again.

At least one calendering roll among the plurality of calendering rolls may be arranged so as to deviate from the center based on the extension length of the housing that supports the calendering roll.

The position where the calendering roll is arranged in the housing may be determined according to a diameter of the calendering rolls, an interval between respective adjacent calendering roll, and the extension length of the housing.

The electrode manufacturing apparatus may further comprise a connection member arranged between two adjacent housings among the plurality of housings.

The plurality of housings may comprise a bearing part that is formed between the housing and the rotating shaft, respectively.

### [Advantageous Effects]

An electrode manufacturing apparatus according to embodiments of the present disclosure can improve deformation (i.e., distortion) occurring in the housing for supporting respective calendering rolls, and at the same time, can effectively arrange the calendering roll and the housing within a limited space to increase space utilization.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a schematic diagram of a conventional electrode manufacturing apparatus.
FIG. 2 is a perspective view showing an electrode manufacturing apparatus according to one specific embodiment of the present disclosure.
FIG. 3 is a side view showing the side surface of the electrode manufacturing apparatus of FIG. 2.
FIG. 4 is a schematic diagram showing a force applied to the electrode manufacturing apparatus of FIG. 2.
FIG. 5 is a graph showing the relationship between the force applied to the electrode of the electrode manufacturing apparatus according to one specific embodiment of the present disclosure and the length of the housing.
FIG. 6 is a partially enlarged view for explaining the deformation mitigation of the first bearing part of the electrode manufacturing apparatus according to one specific embodiment of the present disclosure.
FIG. 7 is a partially enlarged view for explaining the deformation mitigation of the second bearing part of the electrode manufacturing apparatus according to one specific embodiment of the present disclosure.
FIG. 8 is a partially enlarged view for explaining the deformation mitigation of the third bearing part of the electrode manufacturing apparatus according to one specific embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Although the terms representing directions such as front, rear, left, right, upper and lower directions are used in the present embodiment, it would be obvious to those skilled in the art that these merely represent for convenience of explanation, and may differ depending on a position of an observer, a position of an object, or the like.

Further, throughout the description, when a portion is referred to as "including " or "comprising" a certain component, it means that the portion can further include o ther components, without excluding the other components, unless otherwise stated.

Further, throughout the description, when referred to as "planar", it means whe n a target portion is viewed from the upper side, and when it is referred to as "cross -sectional", it means when a target portion is viewed from the side of a cross section cut vertically.

Hereinafter, specific embodiments of the present disclosure will be described with reference to the accompanying drawings.

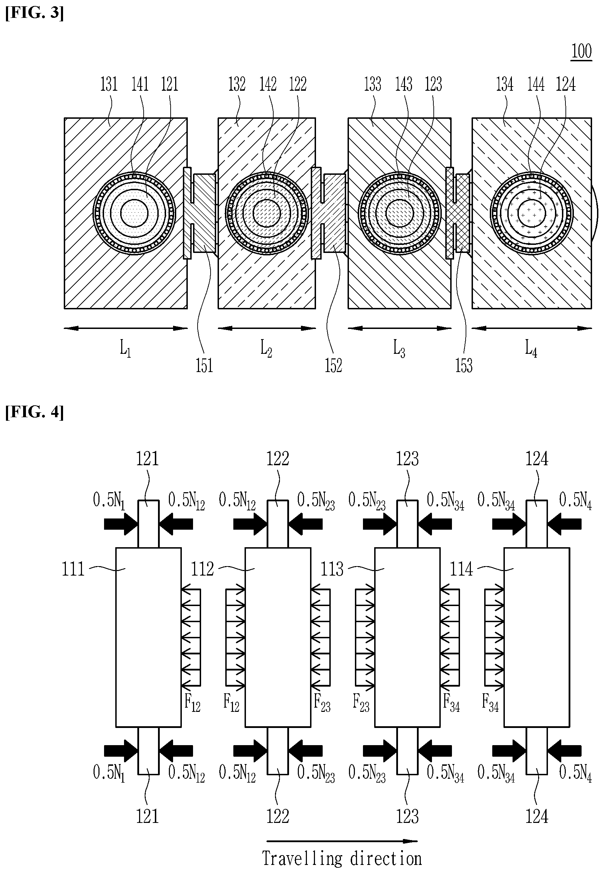

FIG. 2 is a perspective view showing an electrode manufacturing apparatus according to one specific embodiment of the present disclosure. FIG. 3 is a side view showing the side surface of the electrode manufacturing apparatus of FIG. 2.

Referring to FIGS. 2 and 3, an electrode manufacturing apparatus 100 according to one specific embodiment of the present disclosure may include a plurality of calendering rolls 111, 112, 113, 114 that are arranged at predetermined intervals so that an electrode sheet is rolled sequentially, a plurality of housings 131, 132, 133, 134 that individually support respective rotating shafts 121, 122, 123, 124 of the plurality of calendering rolls 111, 112, 113, 114, and connection members 151, 152, 153 arranged between two adjacent housings among the plurality of housings 131, 132, 133, 134, wherein the plurality of housings 131, 132, 133, 134 may include bearing parts 141, 142, 143, 144 that are formed between the housings and the rotating shafts 121, 122, 123, 124, respectively.

The plurality of calendering rolls 111, 112, 113, 114 are generally cylindrical members. The plurality of calendering rolls 111, 112, 113, 114 can rotate based on a rotation shafts 121, 122, 123, 124. A dry electrode sheet (not shown) may be stretched as it travels between the plurality of calendering rolls 111, 112, 113, 114. The thickness of the electrode sheet may be determined by the interval between adjacent calendering rolls, etc. That is, as the interval between the calendering rolls is narrower, the thickness of the electrode sheet may be thinner.

Meanwhile, in the examples shown in FIGS. 1 and 2, the plurality of calendering rolls 111, 112, 113, 114 and other associated components are four in number, and the following description will also be given based on this, however, the number of the plurality of calendering rolls and other associated components may be modified or changed in various ways according to the environment in which the present disclosure is realized.

Further, for convenience of explanation, the plurality of calendering rolls and other associated components are distinguished by including ordinal numbers such as first, second, third, and fourth as one moves from upstream to downstream of the travelling direction based on the travelling direction of the electrode sheet, however, this is used for the purpose of distinguishing any one of the plurality of components from the rest, and is not used to limit the components by such terms.

The rotation shafts 121, 122, 123, 124 may be formed to protrude from both side ends of the plurality of calendering rolls 111, 112, 113, 114, respectively. Meanwhile, a driving means (not shown) for rotating the respective calendering rolls 111, 112, 113, 114 can be connected to the respective rotation shafts 121, 122, 123, 124. Power is transmitted from the driving means to the respective rotation shafts 121, 122, 123, 124, so that the calendering rolls 111, 112, 113, 114 connected to the rotation shafts 121, 122, 123, 124 can rotate. At this time, the respective calendering rolls 111, 112, 113, 114 may be rotatably driven independently of each other.

The plurality of housings 131, 132, 133, 134 may be individually formed to support the plurality of calendering rolls 111, 112, 113, 114, respectively. That is, the pair of housings 131, 132, 133, 134 may support rotation shafts 121, 122, 123, 124 extending from both side ends of one of the calendering rolls 111, 112, 113, 114, respectively. In one specific embodiment of the present disclosure, the plurality of housings 131, 132, 133, 134 have an approximately rectangular shape, however, the shapes of the plurality of housings 131, 132, 133, 134 may be modified or changed in various ways according to the environment in which the present invention is realized. Meanwhile, the following description will be given based on the case where the plurality of housings 131, 132, 133, 134 are rectangular in shape, and a specific description of the plurality of housings 131, 132, 133, 134 will be given below.

The connection members 151, 152, 153 are arranged between two adjacent housings among the plurality of housings 131, 132, 133, 134 to adjust the interval between the two adjacent calendering rolls. Further, the connection members 151, 152, 153 may transmit force to the adjacent housings. Meanwhile, the plurality of housings 131, 132, 133, 134 may be formed with a groove (not shown) for housing the connection members 151, 152, 153.

The bearing parts 141, 142, 143, 144 are arranged in the openings of the plurality of housings 131, 132, 133, 134 through which the respective rotation shafts 121, 122, 123, 124 pass, and can support the self-weight of respective rotation shafts 121, 122, 123, 124 and the load applied to the rotation shafts. The friction between the rotation shafts 121, 122, 123, 124 and the housings 131, 132, 133, 134 is reduced by the bearing parts 141, 142, 143, 144, so that the plurality of calendering rolls 111, 112, 113, 114 can rotate smoothly. At this time, the type of the bearing parts 141, 142, 143, 144 may be modified or changed in various ways according to the environment in which the present disclosure is realized.

The extension length L of at least one housing among the plurality of housings 131, 132, 133, 134 in the travelling direction of the electrode sheet may be different from the extension lengths of the remaining housings. For example, the extension length L1 of the first housing 131 may be different from the extension lengths L2, L3, L4 of the remaining housings 132, 133, 134. Alternatively, the respective extension lengths L1, L2, L3, L4 of the plurality of housings 131, 132, 133, 134 may be different from each other. However, the respective extension lengths L1, L2, L3, L4 of the plurality of housings 131, 132, 133, 134 are not limited by the above-mentioned examples, and may be modified or changed in various ways according to the environment in which the present disclosure is realized, as described below.

Specifically, the extension length of at least one housing among the plurality of housings 131, 132, 133, 134 may be determined by the magnitude of the linear pressure (nip pressure) by the calendering roll that is supported by the at least one housing. Generally, the plurality of calendering rolls 111, 112, 113, 114 may fabricate the electrode sheet into a thin form by rolling the electrode sheet, and the linear pressure means a value obtained by dividing the pressure (or force) applied to the electrode sheet by the plurality of calendering rolls 111, 112, 113, 114 by the contact length (width) of the calendering rolls 111, 112, 113, 114.

The load applied to each of the plurality of housings 131, 132, 133, 134 is affected by the linear pressure applied to the electrode sheet by the calendering rolls 111, 112, 113, 114 supported by the respective housings 131, 132, 133, 134. Therefore, the extension lengths of the housings 131, 132, 133, 134 are determined according to the load applied to the respective housings 131, 132, 133, 134 (i.e., the linear pressure of the calendering rolls), thereby capable of improving deformation (i.e., distortion) that occurs in the respective housings 131, 132, 133, 134.

First, the extension length L1 of the first housing 131 located at the uppermost end in the travelling direction among the plurality of housings 131, 132, 133, 134 may be determined regardless of the magnitude of the linear pressure. For example, the extension length L1 of the first housing 131 among the plurality of housings 131, 132, 133, 134 may be greater than the extension length of any one housing among the remaining housings 132, 133, 134. That is, the extension length L1 of the first housing 131 may be the longest among the plurality of housings 131, 132, 133, 134.

Among the remaining housings 132, 133, and 134 excluding the first housing 131 among the plurality of housings 131, 132, 133, 134, if the magnitude of the linear pressure by the second calendering roll supported by any one second housing is larger than the magnitude of the linear pressure by the third calendering roll supported by the other third housing, the extension length of the second housing may be smaller than the extension length of the third housing. Meanwhile, the above-mentioned second housing, third housing, second calendering roll, and third calendering roll are used for the purpose of distinguishing any one of the plurality of components from the rest, and do not refer to the second housing 132, third housing 133, second calendering roll 112, and third calendering roll 113 shown in FIGS. 2 and 3, unless the drawing symbols are listed together.

For example, when the linear pressure by the second calendering roll 112 is larger than the linear pressure by the third calendering roll 113, the extension length L2 of the second housing 132 is smaller than the extension length L3 of the third housing 133. Conversely, when the linear pressure by the third calendering roll 113 is larger than the linear pressure by the second calendering roll 112, the extension length L3 of the third housing 133 is smaller than the extension length L2 of the second housing 132. As another example, when the linear pressure by the second calendering roll 112 is larger than the linear pressure by the fourth calendering roll 114, the extension length L2 of the second housing 132 is smaller than the extension length L4 of the fourth housing 134. That is, the extension lengths L2, L3, L4 of the second to fourth housings 132, 133, 134 may be determined according to the magnitude of the respective linear pressures by the second to fourth calendering rolls 112, 113, 114.

In this case, the third housing may be located on more downstream side in the travelling direction than the second housing, and the magnitude of the linear pressure by the second calendering roll may be larger than the magnitude of the linear pressure by the third calendering roll. Similarly, the second housing, third housing, second calendering roll, and the third calendering roll described above are used for the purpose of distinguishing any one of the plurality of components from the rest, and do not refer to the second housing 132, the third housing 133, the second calendering roll 112, and the third calendering roll 113 shown in FIGS. 2 and 3, unless the drawing reference numbers are listed together.

For example, the third housing 133 is located on more downstream side in the travelling direction than the second housing 132, in which case the magnitude of the linear pressure by the second calendering roll 112 is larger than the magnitude of the linear pressure by the third calendering roll 113, so that the extension length L2 of the second housing 132 is smaller than the extension length L3 of the third housing 133. Further, the fourth housing 134 is located on more downstream side in the travelling direction than the second housing 132, in which case the magnitude of the linear pressure by the second calendering roll 112 is larger than the magnitude of the linear pressure by the fourth calendering roll 114, so that the extension length L2 of the second housing 132 is smaller than the extension length L4 of the fourth housing 134. Further, the fourth housing 134 is located on more downstream side in the travelling direction than the third housing 133, in which case the magnitude of the linear pressure by the third calendering roll 113 is larger than the magnitude of the linear pressure by the fourth calendering roll 114, so that the extension length L3 of the third housing 133 is smaller than the extension length L4 of the fourth housing 134. That is, among the two calendering rolls among the second to fourth calendering rolls 112, 113, 114, the linear pressure by the calendering roll located at a downstream side of the travelling direction is smaller than the linear pressure by the calendering roll located at the upstream side of the travelling direction, so that the extension length of the housing can be determined according to the magnitude of the linear pressure by respective calendering rolls.

The magnitude of the linear pressure by the plurality of calendering rolls 111, 112, 113, 114 may decrease toward the downstream of the travelling direction. For example, the magnitude of the linear pressure by the second calendering roll 112 is larger than the magnitude of the linear pressure by the third calendering roll 113, and the magnitude of the linear pressure by the third calendering roll 113 is larger than the magnitude of the linear pressure by the fourth calendering roll 114. Thereby, the extension length L2 of the second housing 132 may be smaller than the extension length L3 of the third housing 133, and the extension length L3 of the third housing 133 may be smaller than the extension length L4 of the fourth housing 134.

At least one calendering roll among the plurality of calendering rolls 111, 112, 113, 114 may be located to deviate from the center based on the extension length of the housing for supporting the calendering roll. If the plurality of calendering rolls 111, 112, 113, 114 are located at the center based on the extension length of the plurality of housings 131, 132, 133, 134, the respective extension lengths of the plurality of housings 131, 132, 133, 134 may be different from each other, so that the diameters of the plurality of calendering rolls 111, 112, 113, 114 must also be different from each other. Generally, since the diameters of the plurality of calendering rolls 111, 112, 113, 114 are equal to each other, at least one calendering roll among the plurality of calendering rolls 111, 112, 113, 114 is preferably arranged to deviate from the center based on the extension length of the housing for supporting the calendering roll.

For example, when the first housing 131 among the plurality of housings 131, 132, 133, 134 has the longest extension length, the first calendering roll 111 connected to the first housing 131 may be arranged to be biased toward the second housing 132 from the center of the first housing 131. That is, the position at which respective calendering rolls 111, 112, 113, 114 are arranged in respective housings 131, 132, 133, 134 is determined according to the diameter of respective calendering rolls 111, 112, 113, 114, the interval between respective calendering rolls 111, 112, 113, 114, the extension length of the respective housings 131, 132, 133, 134, and the like, and may be modified or changed in various ways according to the environment in which the present disclosure is realized.

FIG. 4 is a schematic diagram showing a force applied to the electrode manufacturing apparatus of FIG. 2.

Referring to FIG. 4, a linear pressure Fᵢⱼ is applied between each of the calendering rolls 111, 112, 113 and 114, and a reaction force Nᵢ or Nᵢⱼ by the respective rotation shafts 121, 122, 123 and 124 is applied to the respective housings 131, 132, 133 and 134. Here, the linear pressure Fᵢⱼ refers to the force applied to the respective calendering rolls by the electrode sheet passing between the i-th calendering roll and j-th calendering roll based on the travelling direction, the reaction force Nᵢ refers to the force applied to the i-th housing, the reaction force Nᵢⱼ refers to the force applied between the i-th housing and the j-th housing, and i and j refer to natural numbers greater than or equal to 1.

When a force equilibrium relation expression is established based on the forces shown in FIG. 4, it is as shown in the following Mathematical Expression 1. [Mathematical Expression 1] ${N}_{1} = {N}_{12} + {F}_{12} = {N}_{23} + {F}_{23} = {N}_{34} + {F}_{34} = {N}_{4}$

As previously described, the magnitude of the linear pressure by the plurality of calendering rolls 111, 112, 113, 114 may decrease toward the downstream of the travelling direction. That is, in order to satisfy the relation expression of Mathematical Expression 1 where F₁₂>F₂₃>F₃₄, the result of N₁₂<N₂₃<N₃₄ can be derived. In this case, the portions to which the reaction force Nᵢ or Nᵢⱼ is applied are the respective housings 131, 132, 133, 134, and more specifically, the bearing parts 141, 142, 143, 144 of the respective housings 131, 132, 133, 134. Therefore, in order to minimize deformation of these portions, the housing to which the reaction force Nᵢ or Nᵢⱼ is strongly applied may be formed to be large, and the housing to which the reaction force Nᵢ or Nᵢⱼ is weakly applied may be formed to be small. As a result, the electrode manufacturing apparatus 100 according to one specific embodiment of the present disclosure can improve deformation (i.e., distortion) that occurs in the respective housings 131, 132, 133, 134, and at the same time, effectively arrange the calendering rolls 111, 112, 113, 114 and the housings 131, 132, 133, 134 within a limited space, thereby increasing space utilization.

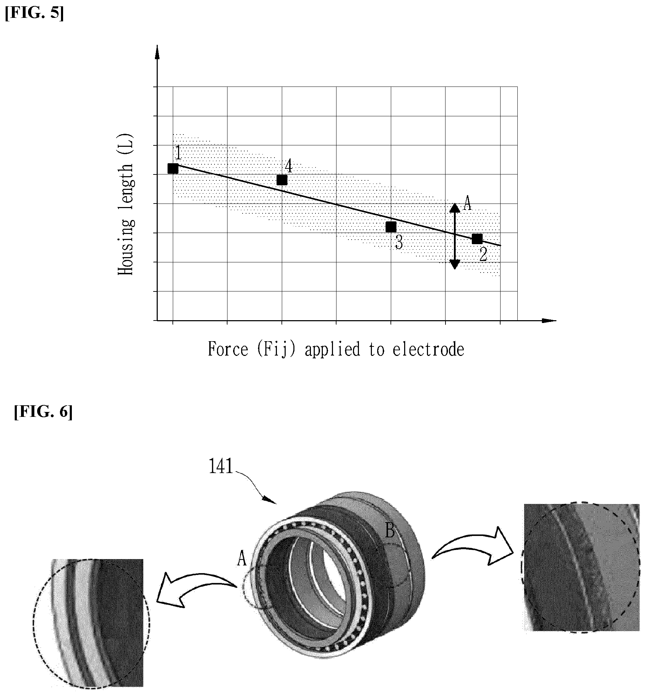

FIG. 5 is a graph showing the relationship between the force applied to the electrode of the electrode manufacturing apparatus according to one specific embodiment of the present disclosure and the length of the housing.

Referring to FIG. 5, the tendency value of data on the respective extension lengths L1, L2, L3, L4 of the plurality of housings 131, 132, 133, 134 and the magnitude of the respective linear pressures by the plurality of calendering rolls 111, 112, 113, 114 is determined, and based on the tendency value, the respective extension lengths L1, L2, L3, L4 of the plurality of housings 131, 132, 133, 134 can be determined so that the respective extension lengths L1, L2, L3, L4 of the plurality of housings 131, 132, 133, 134 are within a predetermined range.

At this time, the respective extension lengths L1, L2, L3, L4 of the plurality of housings 131, 132, 133, 134 can be determined so that the sum of the respective extension lengths L1, L2, L3, L4 of the plurality of housings 131, 132, 133, 134 are within a predetermined range.

The graph of FIG. 5 shows the extension lengths L1, L2, L3, L4 of the plurality of housings 131, 132, 133, 134 when the magnitude of the linear pressure by the plurality of calendering rolls 111, 112, 113, 114 decreases toward the downstream of the travelling direction, i.e., when the linear pressure F₁₂ > linear pressure F₂₃ > linear pressure F₃₄. In this case, it shows the relationship of the extension length L1 of the first housing 131 > the extension length L4 of the fourth housing 134 > the extension length L3 of the third housing 133 > the extension length L2 of the second housing 132. The tendency value of the magnitude of the linear pressure by the plurality of calendering rolls 111, 112, 113, 114 and the extension lengths L1, L2, L3, L4 of the plurality of housings 131, 132, 133, 134 can be represented as the dotted line graph shown in FIG. 5. At this time, the respective extension lengths L1, L2, L3, L4 of the plurality of housings 131, 132, 133, 134 can be determined to be located within a predetermined range of the tendency value (the dotted line graph of FIG. 5).

For example, if the linear pressure F₁₂ = 14ton·f, linear pressure F₂₃ = 10ton·f, linear pressure F₃₄ = 5ton·f, and the sum of the extension lengths L1, L2, L3, L4 of the plurality of housings 131, 132, 133, 134 is 1000mm, the extension lengths L1, L2, L3, L4 of each of the plurality of housings 131, 132, 133, 134 can be determined as L1 = 280mm, L2 = 220mm, L3 = 230mm, and L4 = 270mm. Meanwhile, the above-mentioned numerical values are arbitrary values for explaining the present disclosure, and may be modified or changed in various ways according to the environment in which the present disclosure is realized.

If at least one of the extension lengths L1, L2, L3, L4 of the plurality of housings 131, 132, 133, 134 deviates from the predetermined range based on the above-mentioned tendency value, the respective extension lengths L1, L2, L3, L4 of the plurality of housings 131, 132, 133, 134 may be determined again. In this case, the above-mentioned tendency value may be determined again according to the respective extension lengths L1, L2, L3, and L4 of the plurality of housings 131, 132, 133, and 134 that have been determined again.

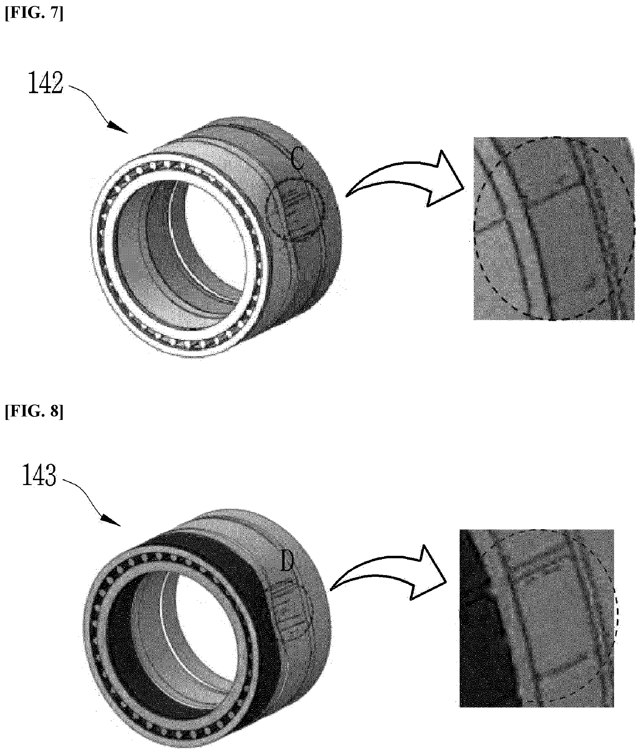

FIG. 6 is a partially enlarged view for explaining the deformation mitigation of the first bearing part of the electrode manufacturing apparatus according to one specific embodiment of the present disclosure. FIG. 7 is a partially enlarged view for explaining the deformation mitigation of the second bearing part of the electrode manufacturing apparatus according to one specific embodiment of the present disclosure. FIG. 8 is a partially enlarged view for explaining the deformation mitigation of the third bearing part of the electrode manufacturing apparatus according to one specific embodiment of the present disclosure.

FIGS. 6 to 8 show respectively simulation results of deformations (distortions) that occur in the first to third bearing parts 141, 142, 143 when the extension lengths of the plurality of housings 131, 132, 133, 134 supporting the respective calendering rolls 111, 112, 113, 114 are equal. Further, the enlarged portions of A to D in FIGS. 6 to 8 show respectively simulation results of deformations (distortions) that occur in the first to third bearing parts 141, 142, 143 of the electrode manufacturing apparatus 100 according to one specific embodiment of the present disclosure.

As shown in FIG. 6, in the first bearing part 141, excessive deformation (distortion) occurs in portions A and B. On the other hand, in the enlarged portions of A and B, deformation (distortion) is mitigated.

Similarly, as shown in FIGS. 7 and 8, in the second bearing part 142, excessive deformation (distortion) occurs in the portion C, and in the third bearing part 143, excessive deformation (distortion) occurs in the portion D. On the other hand, deformation (distortion) is mitigated in each of the enlarged portions of C and D.

Although preferred embodiments of the present disclosure have been described in detail above, the scope of the present disclosure is not limited thereto, and various modifications and improvements made by those skilled in the art using the basic concepts of the present disclosure, which are defined in the appended claims, also belong to the scope of the present disclosure.

### [Description of Reference Numerals]

100: electrode manufacturing apparatus
111, 112, 113, 114: a plurality of calendering rolls
121, 122, 123, 124: a plurality of rotation shafts
131, 132, 133, 134: a plurality of housings
141, 142, 143, 144: a plurality of bearing parts
151, 152, 153: a plurality of connection members

## Claims

1. An electrode manufacturing apparatus comprising:
a plurality of calendering rolls that are arranged at predetermined intervals so that an electrode sheet is rolled sequentially; and
a plurality of housings that individually support respective rotating shafts of the plurality of calendering rolls,
wherein an extension length of at least one housing among the plurality of housings in a travelling direction of the electrode sheet is different from an extension length of the remaining housings.

2. The electrode manufacturing apparatus according to claim 1,
wherein the extension length of at least one housing among the plurality of housings is determined by a magnitude of a linear pressure by the calendering roll that is supported by the at least one housing.

3. The electrode manufacturing apparatus according to claim 2,
wherein the extension length of a first housing which is located at the uppermost end in the travelling direction of the electrode sheet among the plurality of housings is determined regardless of the magnitude of the linear pressure.

4. The electrode manufacturing apparatus according to claim 3,
wherein the extension length of the first housing among the plurality of housings is greater than the extension length of any one housing among the remaining housings.

5. The electrode manufacturing apparatus according to claim 3,
wherein among the remaining housings excluding the first housing among the plurality of housings, if the magnitude of the linear pressure by a second calendering roll supported by any one second housing is larger than the magnitude of the linear pressure by a third calendering roll supported by the other third housing, the extension length of the second housing is smaller than the extension length of the third housing.

6. The electrode manufacturing apparatus according to claim 5,
wherein the third housing is located on more downstream side in the travelling direction than the second housing, and
the magnitude of the linear pressure by the second calendering roll is larger than the magnitude of the linear pressure by the third calendering roll.

7. The electrode manufacturing apparatus according to claim 6,
wherein the magnitude of the linear pressure by the plurality of calendering rolls decreases toward the downstream of the travelling direction.

8. The electrode manufacturing apparatus according to claim 5,
wherein a tendency value of data on the respective extension lengths of the plurality of housings and the magnitude of the respective linear pressure by the plurality of calendering rolls is determined, and
based on the tendency value, the respective extension lengths of the plurality of housings is determined so that the respective extension lengths of the plurality of housings is within a predetermined range.

9. The electrode manufacturing apparatus according to claim 8,
wherein the respective extension lengths of the plurality of housings is determined such that the sum of the respective extension lengths of the plurality of housings is within a predetermined range.

10. The electrode manufacturing apparatus according to claim 9,
wherein if at least one of the extension lengths of the plurality of housings falls outside the predetermined range based on the tendency value, the respective extension lengths of the plurality of housings is determined again.

11. The electrode manufacturing apparatus according to claim 1,
wherein at least one calendering roll among the plurality of calendering rolls is arranged so as to deviate from the center based on the extension length of the housing that supports the calendering roll.

12. The electrode manufacturing apparatus according to claim 9,
wherein the position where the calendering roll is arranged in the housing is determined according to a diameter of the calendering rolls, an interval between the respective calendering roll and adjacent calendering roll, and the extension length of the housing.

13. The electrode manufacturing apparatus according to claim 1,
further comprising a connection member arranged between two adjacent housings among the plurality of housings.

14. The electrode manufacturing apparatus according to claim 1,
wherein the plurality of housings comprises a bearing part that is formed between the housing and the rotating shaft, respectively.
